# EUROPÄISCHE PATENTSCHRIFT

(11) **EP 1 497 831 B1**
(45) Veröffentlichungstag und Bekanntmachung des Hinweises auf die Patenterteilung: **13.09.2006**
(21) Anmeldenummer: 03709762.3
(22) Anmeldetag: 07.03.2003
(51) Int. Cl.: G11B 33/04, G11B 23/03, B65D 85/58

(54) **VERPACKUNGSBAUSATZ**
PACKAGING KIT
KIT D'EMBALLAGE

(30) Priorität: 19.04.2002 DE 20206232 U
(43) Veröffentlichungstag der Anmeldung: 19.01.2005
(73) Patentinhaber: Dösinger, Stephan, 80801 München (DE); Schmid, Werner, 80639 München (DE)
(72) Erfinder: Dösinger, Stephan, 80801 München (DE); Schmid, Werner, 80639 München (DE)
(74) Vertreter: Grünecker, Kinkeldey, Stockmair & Schwanhäusser Anwaltssozietät
(86) Internationale Anmeldenummer: PCT/EP2003/002360
(87) Internationale Veröffentlichungsnummer: WO 2003/090228

(56) Entgegenhaltungen:
- FR-A- 2 755 395
- US-A- 4 507 883
- US-A- 5 219 216
- US-A- 5 595 308
- US-B1- 6 367 689

## Beschreibung

Die vorliegende Erfindung bezieht sich auf einen Verpackungsbausatz für Datenträger, mit einem Behälter, in dem zumindest zwei Datenträgerhüllen mit jeweils einer Hüllenvorderseite und wenigstens zwei Etiketten aufgenommen sind, und die Etiketten jeweils eine Etikettenvorderseite und eine Etikettenrückseite aufweisen, mit der die Etiketten an dem Datenträger anbringbar sind.

Ein derartiger Verpackungsbausatz ist aus dem Stand der Technik bekannt. Er wird angeboten, um z.B. Compact Discs (CD) zu archivieren. Die Datenträgerhüllen dienen dabei zur Aufnahme der CD's und die Etiketten können mit ihrer Etikettenrückseite an der CD angebracht werden. Der Behälter kann z. B. 10 Datenträgerhüllen und 10 Etiketten beinhalten. Die Datenträger können einen vom Anwender gewünschten Datensatz enthalten, wie z. B. Musiktitel und dergleichen. Zum Archivieren kann der Benutzer die Diskettenhüllen und die Etiketten beschriften, wobei jeweils ein mit einem Etikett versehener Datenträger in einer Datenträgerhülle aufgenommen werden kann. Anstelle von CD's können auch Disketten oder andere Datenträger verwendet werden.

Wenn es gilt größere Mengen an Datenträgern zu archivieren, erweist sich der bislang bekannte Verpackungsbausatz jedoch als umständlich.

Die US 6,367,689 B beschreibt einen bedruckbaren Faltbogen zum Herstellen einer Verpackung.

Die US 4,507,883 A bezieht sich auf ein mehrteiliges Etikettierungssystem für Disketten unter Verwendung gleichartiger Datenträgerhüllen.

Die FR 2 755 395 A, US 5,595,308 A und US 5,219,21 A zeigen einen Behälter für Datenträger.

Die Aufgabe der vorliegenden Erfindung ist es, das Archivieren von Datenträgern zu vereinfachen.

Die Aufgabe wird erfindungsgemäß gelöst durch einen Verpackungsbausatz der eingangs genannten Art, bei dem die Etikettenvorderseite eines der Etiketten mit der Hüllenvorderseite einer zugeordneten Datenträgerhülle wenigstens abschnittsweise übereinstimmt und die Hüllenvorderseiten der Datenträgerhüllen voneinander verschieden sind.

Auf diese Weise lassen sich die Datenträger wesentlich einfacher archivieren. Jeder Datenträgerhülle ist ein entsprechendes Etikett zugeordnet. Durch Anbringen des Etiketts auf dem Datenträger ist ohne weiteres ersichtlich, welcher Datenträgerhülle der Datenträger zugeordnet werden soll. Gegenüber herkömmlichen Lösungen ist es nicht mehr erforderlich, den Datenträger zu markieren oder zu beschriften, um ihn einer entsprechenden Datenträgerhülle zuzuordnen. Bei den bislang bekannten Verpackungsbausätzen waren die Datenträgerhüllen und die Etiketten jeweils einheitlich gestaltet, so dass es dem Anwender überlassen blieb, die Datenträgerhüllen und/oder die Etiketten mit Markierungen oder Beschriftungen zu versehen. Der neuartige Verpackungsbausatz eignet sich insbesondere für Datenträger, die Datensätze speichern, die aus dem Internet heruntergeladen wurden. Hierbei kann es sich z. B. um Musiktitel, Videos oder dergleichen handeln. Da die Daten wie Titel und dergleichen bereits in dem Computer vorhanden sind, kann das Archivieren der namentlichen Kennzeichnung der Titel und dergleichen bereits im Computer erfolgen. Für den Verpackungsbausatz ist es lediglich erforderlich, eine einfache Zuordnung von Etiketten und Datenträgerhüllen zu ermöglicher ohne dass der Anwender zusätzlich die Datenträgerhülle oder das Etikett bearbeiten muss.

Von Vorteil kann es sein, wenn die Etikettenvorderseite vollständig in der zugeordneten Datenträgerhülle aufgeht. Dadurch wird das Zuordnen von Datenträgerhüllen und Etikett bzw. Datenträgern mit Etikett erheblich erleichtert.

Ebenso kann es sich als günstig erweisen, wenn die Etikettenvorderseiten im Wesentlichen ringförmig sind. Dann eignen sich die Etiketten insbesondere für Compact Discs (CD).

Auch kann es sich als vorteilhaft erweisen, wenn die Hüllenvorderseite rechteckig, vorzugsweise quadratisch ist. Diese Form kann sich insbesondere zur Aufnahme von CD's eignen.

Wenn die Außenabmessungen der Etiketten im Wesentlichen den Außenabmessungen der Datenträgerhüllen entsprechen, kann das Bestücken des Behälters mit Datenträgerhüllen und Etiketten erleichtert werden.

Um die Handhabung der Datenträgerhüllen und der Datenträger zu erleichtern, können die Datenträgerhüllen als Taschen mit seitlicher Einstecköffnung ausgebildet sein.

Zur Senkung der Herstellungskosten können die Datenträgerhüllen aus Kartonage gebildet sein.

Zur Vereinfachung der Herstellung und zum einfacheren Bestücken des Behälters kann das Etikett zwei ringförmige, konzentrische Ausstanzungen aufweisen. Dies bietet sich insbesondere bei im Wesentlichen rechteckigen, bzw. quadratischen Etiketten an. Die konzentrischen Ausstanzungen können dabei so bemessen sein, dass ein ringförmiges Etikett verbleibt, dessen Abmessungen an die Abmessungen von Datenträgern, wie z. B. Compact Discs angepasst ist. Die Ausstanzung erstreckt sich dabei nur durch das Etikett selbst. Die Etikettenrückseite wird von einer Trägerschicht, wie z. B. beschichtetes Cellophan, gehalten. Das Etikett ist dann lösbar auf der Trägerschicht angebracht.

Als günstig kann es sich erweisen, wenn in dem Behälter jeweils drei Datenträgerhüllen und drei Etiketten aufgenommen sind.

Zur weiteren Senkung der Herstellungskosten kann der Behälter aus Karton ausgebildet sein. Auch ist es denkbar, den Karton quaderförmig zu gestalten, um ihn dadurch an die Form der Datenträgerhüllen und der Etiketten anzupassen. Durch diese Gestaltung kann der Behälter mit den darin befindlichen Datenträgerhüllen und Etiketten möglichst kompakt gestaltet werden.

Auch kann es sich als vorteilhaft erweisen, wenn im Behälter die Datenträgerhüllen und die Etiketten übereinander angeordnet sind, wobei abwechselnd Datenträgerhüllen und Etiketten benachbart zueinander sind. Dadurch kann die Konfektionierung der Behälter vereinfacht und schnell überprüft werden.

Nachfolgend wird die Erfindung anhand eines Ausführungsbeispiels näher erläutert.

Es zeigen:
- Fig. 1: den erfindungsgemäßen Verpackungsbausatz in einer Draufsicht, wobei der Behälter sichtbar ist;
- Fig. 2: eine Datenträgerhülle in einer Draufsicht;
- Fig. 3: ein der Datenträgerhülle aus Fig. 2 zugeordnetes Etikett;
- Fig. 4: eine weitere Datenträgerhülle in einer Draufsicht,
- Fig. 5: ein der Datenträgerhülle aus Fig. 4 zugeordnetes Etikett in einer Draufsicht.

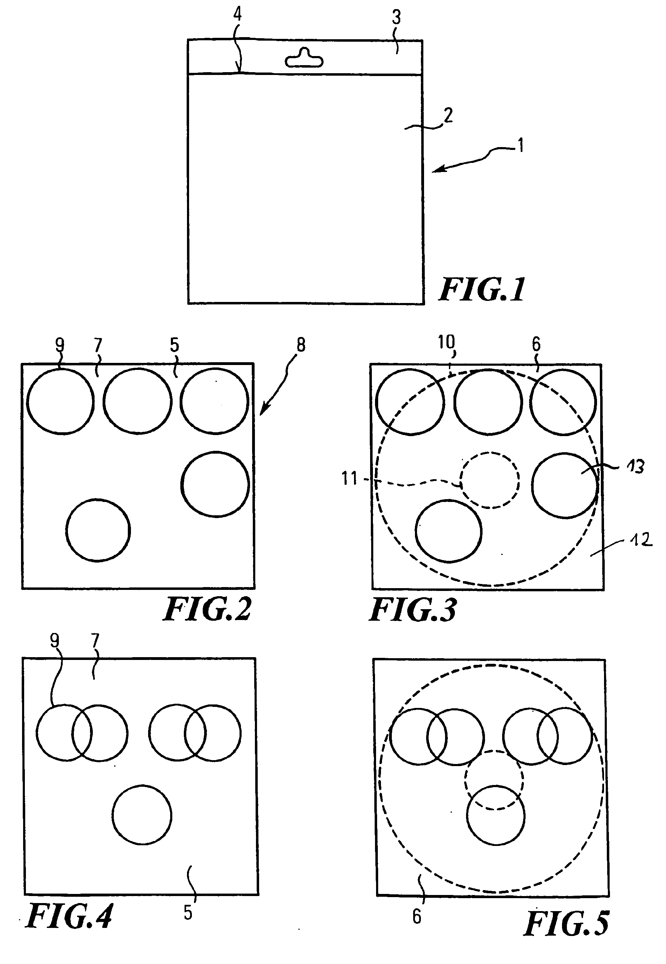

Fig. 1 zeigt den erfindungsgemäßen Verpackungsbausatz 1 in einer Draufsicht, wobei ein Behälter 2 aus Karton sichtbar ist. Der Behälter 2 ist im Wesentlichen quaderförmig, verfügt an seiner Oberseite über eine Aufhängevorrichtung 3. Der Behälter verfügt über eine Faltlasche 4, durch die der nicht sichtbare Innenraum des Behälters 2 zugänglich ist. Im Innenraum des Behälters 2 befinden sich sechs Datenträgerhüllen 5 und sechs Etiketten 6.

Die Datenträgerhülle besteht aus einer Kartonage und verfügt über eine Hüllenvorderseite 7 und eine in der Darstellung in Fig. 2 nicht sichtbare Hüllenrückseite. Insgesamt ist die Datenträgerhülle in der Draufsicht im Wesentlichen quadratisch mit einer seitlichen Einstecköffnung 8, in die ein Datenträger, wie z. B. eine CD oder eine Diskette einsteckbar ist. Im vorliegenden Beispiel werden Compact Discs (CD) in den Datenträgerhüllen aufgenommen. Entsprechend sind die Innenabmessungen der Datenträgerhülle so gewählt, dass eine CD in die Datenträgerhülle einsteckbar ist. Entsprechend der Form einer CD ist die Dicke der Datenträgerhülle wesentlich geringer als ihre Flächenausdehnung in der Ebene der CD.

Die Hüllenvorderseite 7 ist mit einer grafischen Gestaltung 9 versehen. Im gewählten Ausführungsbeispiel wird diese grafische Gestaltung aus diversen Kreisen bestimmter Anordnung gebildet. Alternativ ist es auch denkbar, die Hüllenvorderseite 7 jeweils mit einer Prägung oder einer bestimmten Oberflächenrauhigkeit zu versehen.

Die Hüllenvorderseiten 7 der in den Figuren 2 und 4 dargestellten Ausführungsbeispiele sind erkennbar verschieden.

Die Etiketten 6 sind auf einem Trägermaterial, wie z. B. ein gefettetes Zellophanpapier, lösbar aufgebracht. Die Etiketten sind mit konzentrischen, kreisförmigen Ausstanzungen 10 und 11 versehen, die so bemessen sind, dass ein ringförmiges Etikett entsteht, das von dem Träger abgelöst und auf einer CD dauerhaft angebracht werden kann. Hierzu verfügt das Etikett über eine Klebeschicht, mit der es zunächst an dem Träger und später an der CD haftet.

Die Etiketten sind ebenfalls im Wesentlichen quadratisch in einer Draufsicht. Die Außenabmessungen der Etiketten und der Datenträgerhüllen stimmen in der Draufsicht im Wesentlichen überein.

Eine Etikettenvorderseite 12 ist mit einer grafischen Gestaltung 13 versehen, die der Hüllenvorderseite 7 einer zugehörigen Datenträgerhülle entspricht. Die Gestaltung der Etikettenvorderseite 12 stimmt mit der Gestaltung der Hüllenvorderseite 7 aus Fig. 2 überein. Ebenso trifft dies auf die Gestaltungen von Etikettenvorderseite 12 und Hüllenvorderseite 7 der Figuren 4 und 5 zu.

Nachfolgend wird die Wirkungs- und Funktionsweise der Erfindung näher erläutert:

Ein Anwender, der den erfindungsgemäßen Verpackungsbausatz erwirbt, entnimmt dem Behälter 2 im vorliegenden Beispiel zwei oder drei Datenträgerhüllen 5 und Etiketten 6. In den Figuren sind nur zwei verschiedene Datenträgerhüllen dargestellt. Eine dritte und jede weitere Datenträgerhülle würde sich mit ihrer Hüllenvorderseite von den jeweils anderen Datenträgerhüllen unterscheiden. Die entsprechenden zugeordneten Etikettenvorderseiten hätten eine mit der zugeordneten Datenträgerhülle identische Gestaltung.

Die grafische Gestaltung des Etiketts geht jeweils vollständig in der grafischen Gestaltung der Datenträgerhülle 5 auf. Die Bedienperson kann nunmehr das Etikett vom Träger entfemen und auf einer CD anbringen. Auf diese Weise erfolgt eine unmittelbare Zuordnung zwischen der CD und der Datenträgerhülle.

Gegenüber herkömmlichen Verpackungsbausätzen mit jeweils einheitlichen Datenträgerhüllen und Etiketten kann die Archivierung großer Mengen von CD's erheblich vereinfacht werden.

## Patentansprüche

1. Verpackungsbausatz für Datenträger, mit einem Behälter (2), in dem zumindest zwei Datenträgerhüllen (5) mit jeweils einer Hüllenvorderseite (7) und wenigstens zwei Etiketten (6) aufgenommen sind, und die Etiketten jeweils eine Etikettenvorderseite (12) und eine Etikettenrückseite aufweisen, mit der die Etiketten an dem Datenträger anbringbar sind, **dadurch gekennzeichnet, dass** die Etikettenvorderseite (12) eines der Etiketten (6) mit der Hüllenvorderseite (7) einer zugeordneten der Datenträgerhüllen (5) wenigstens abschnittsweise übereinstimmt und die Hüllenvorderseiten der Datenträgerhüllen voneinander verschieden sind.

2. Verpackungsbausatz nach Anspruch 1, **dadurch gekennzeichnet, dass** die Etikettenvorderseite vollständig in der zugeordneten Datenträgerhülte aufgeht.

3. Verpackungsbausatz nach Anspruch 1 oder 2, **dadurch gekennzeichnet, dass** die Etikettenvorderseiten im Wesentlichen ringförmig sind.

4. Verpackungsbausatz nach einem der vorangegangenen Ansprüche, **dadurch gekennzeichnet, dass** die Hüllenvorderseite rechteckig, vorzugsweise quadratisch ist.

5. Verpackungsbausatz nach einem der vorangegangenen Ansprüche, **dadurch gekennzeichnet, dass** die Außenabmessungen der Etiketten im Wesentlichen den Außenabmessungen der Datenträgerhüllen entsprechen.

6. Verpackungsbausatz nach einem der vorangegangenen Ansprüche, **dadurch gekennzeichnet, dass** die Datenträgerhülle als Tasche mit seitlicher Einstecköffnung (8) ausgebildet sind.

7. Verpackungsbausatz nach einem der vorangegangenen Ansprüche, **dadurch gekennzeichnet, dass** die Datenträgerhüllen aus Kartonage hergestellt sind.

8. Verpackungsbausatz nach einem der vorangegangenen Ansprüche, **dadurch gekennzeichnet, dass** das Etikett zwei ringförmige konzentrische Ausstanzungen (10, 11) aufweist.

9. Verpackungsbausatz nach einem der vorangegangenen Ansprüche, **dadurch gekennzeichnet, dass** die Innenabmessungen der Datenträgerhülle im Wesentlichen der Außenabmessungen einer Compact Disc entsprechen.

10. Verpackungsbausatz nach einem der vorangegangenen Ansprüche, **dadurch gekennzeichnet, dass** jeweils sechs Datenträgerhüllen und sechs Etiketten im Behälter aufgenommen sind.

11. Verpackungsbausatz nach einem der vorangegangenen Ansprüche, **dadurch gekennzeichnet, dass** der Behälter aus Karton hergestellt ist.

12. Verpackungsbausatz nach einem der vorangegangenen Ansprüche, **dadurch gekennzeichnet, dass** die Etiketten und Datenträgerhüllen in einer Weise im Behälter aufgenommen sind, dass einem Etikett jeweils einer Datenträgerhülle benachbart ist.

## Claims

1. A packaging construction set for data carriers with a holder (2) in which at least two data carrier covers (5) with a respective cover front side (7) and at least two labels (6) are accommodated, and the labels each comprise a label front side (12) and a label back side, with which the labels may be applied to the data carrier, **characterized in that** the label front side (12) of one of the labels (6) corresponds at least in a section to the cover front side (7) of one of the associated data carrier covers (5), and the cover front sides of the data carrier covers are different from one another.

2. The packaging construction set according to claim 1, **characterized in that** the label front side is completely received in the associated data carrier cover.

3. The packaging construction set according to claim 1 or 2, **characterized in that** the label front sides are substantially ring-shaped.

4. The packaging construction set according to one of the preceding claims, **characterized in that** the cover front side is rectangular, preferably square.

5. The packaging construction set according to one of the previous claims, **characterized in that** the outer dimensions of the labels substantially correspond to the outer dimensions of the data carrier covers.

6. The packaging construction set according to one of the previous claims, **characterized in that** the data carrier cover is formed as a jacket with a lateral insertion opening (8).

7. The packaging construction set according to one of the previous claims, **characterized in that** the data carrier covers are made of cardboard packaging.

8. The packaging construction set according to one of the previous claims, **characterized in that** the label comprises two ring-shaped concentric cuttings (10), (11).

9. The packaging construction set according to one of previous claims, **characterized in that** the inner dimensions of the data carrier cover substantially correspond to the outer dimensions of a compact disc.

10. The packaging construction set according to one of the previous claims, **characterized in that** the holder contains six respective data carrier covers and labels.

11. The packaging construction set according to one of the previous claims, **characterized in that** the holder is made of cardboard.

12. The packaging construction set according to one of the previous claims, **characterized in that** the labels and the data carrier covers are contained in the holder such that a label is adjacent to a respective data carrier cover.

## Revendications

1. Kit d'emballage pour supports de données, avec un coffret (2) qui reçoit au moins deux boîtiers de support (5) présentant chacun une face avant (7), et au moins deux étiquettes (6), chaque étiquette présentant une face avant (12) et une face arrière avec laquelle elle peut être fixée sur le support de données, **caractérisé en ce que** la face avant (12) de l'une des étiquettes (6) coïncide au moins par sections avec la face avant (7) d'un boîtier de support de données (5) associé, et les faces avant des boîtiers sont différentes les unes des autres.

2. Kit d'emballage selon la revendication 1, **caractérisé en ce que** la face avant des étiquettes se prolonge entièrement par le boîtier de support de données associé.

3. Kit d'emballage selon la revendication 1 ou 2, **caractérisé en ce que** la face avant des étiquettes est sensiblement annulaire.

4. Kit d'emballage selon l'une des revendications précédentes, **caractérisé en ce que** la face avant du boîtier est rectangulaire, de préférence carrée.

5. Kit d'emballage selon l'une des revendications précédentes, **caractérisé en ce que** les dimensions extérieures des étiquettes correspondent sensiblement aux dimensions extérieures des boîtiers de support de données.

6. Kit d'emballage selon l'une des revendications précédentes, **caractérisé en ce que** le boîtier de support de données est conçu comme une pochette avec une ouverture d'introduction latérale (8).

7. Kit d'emballage selon l'une des revendications précédentes, **caractérisé en ce que** les boîtiers de support de données sont fabriqués à partir d'un cartonnage.

8. Kit d'emballage selon l'une des revendications précédentes, **caractérisé en ce que** l'étiquette présente deux parties découpées concentriques annulaires (10, 11).

9. Kit d'emballage selon l'une des revendications précédentes, **caractérisé en ce que** les dimensions intérieures du boîtier de support de données correspondent sensiblement aux dimensions extérieures d'un disque compact.

10. Kit d'emballage selon l'une des revendications précédentes, **caractérisé en ce que** six boîtiers de support de données et six étiquettes sont logés dans chaque coffret.

11. Kit d'emballage selon l'une des revendications précédentes, **caractérisé en ce que** le coffret est fabriqué à partir de carton.

12. Kit d'emballage selon l'une des revendications précédentes, **caractérisé en ce que** les étiquettes et les boîtiers de support de données sont logés dans le coffret de sorte qu'une étiquette soit voisine de chaque boîtier.
